# EUROPEAN PATENT APPLICATION

(11) **EP 4 844 996 A1**
(43) Date of publication of application: **25.11.2026**
(21) Application number: 26165898.3
(22) Date of filing: 18.03.2026
(51) Int. Cl.: H02K 7/14, B60K 7/00, H02K 1/18, H02K 1/32, H02K 9/22, H02K 11/25, H02K 11/33, H02K 21/02, H02K 21/24, H02K 1/2798

(54) **ELECTRIC HUB STRUCTURE BASED ON AXIAL MOTOR AND ELECTRIC WHEEL**

(30) Priority: 23.05.2025 CN 202510672409
(71) Applicant: Shenzhen Shifang Technovation Limited, Shenzhen, Guangdong 518000 (CN); Sun Yat-sen University, Guangzhou City Guangdong Province (CN)
(72) Inventor: LIANG, Xiaoling, Shenzhen, 518000 (CN); HUANG, He, Shenzhen, 518000 (CN); CHENG, Jie, Shenzhen, 518000 (CN); WEI, Jingbo, Shenzhen, 518000 (CN)
(74) Representative: Metida

(57) **Abstract**

The present disclosure relates to the field of electric wheels, and in particular, to an electric hub structure based on an axial motor and an electric wheel. The electric hub structure includes a hub, with a center rotationally connected to an axle. A stator is fixedly connected to an outer side of the axle, and the stator is located within the hub. A rotor is fixedly connected to a position of an inner side of the hub close to the stator. The stator includes a motor core fixedly connected to the axle and a plurality of coils fixedly connected to the motor core. All the coils are circularly arrayed on the motor core with an axis of the axle as a center, and each coil is arranged away from the axle. The rotor includes a plurality of magnetic steels fixedly connected within the hub.

## Description

### TECHNICAL FIELD

The present disclosure relates to the field of electric wheels, and in particular, to an electric hub structure based on an axial motor.

### BACKGROUND

An electric wheel is a type of wheel internally provided with a motor drive, and the electric wheel can be driven to rotate through a motor. A vehicle such as a bicycle can use the electric wheel to facilitate a user in saving effort while riding. A motor of a current electric wheel is typically arranged in a hub at a center of a tire, and the user starts the motor or adjusts the rotational speed of the motor through a constant-speed or control switch. The motor of the electric wheel is typically a common radial motor, which features mature technology and good heat dissipation.

Existing technical solutions mentioned above have the following defects: the radial motor, when arranged within the hub at the center of the tire, can only generate force from the center of the tire, which results in a long magnetic flux path and a low energy utilization rate, leading to significant energy loss in the motor.

### SUMMARY

An objective of the present disclosure is to provide an electric hub structure based on an axial motor, which drives a wheel to rotate through an axial motor structure, thereby achieving effects of a shorter magnetic flux path and a higher energy utilization rate.

In order to achieve the above-mentioned objective, the present disclosure adopts the following technical solution:

In a first aspect, an embodiment provides an electric hub structure based on an axial motor, including a hub, with a center rotationally connected to an axle. A stator is fixedly connected to an outer side of the axle and is located within the hub. A rotor is fixedly connected to a position of an inner side of the hub close to the stator. The stator includes a motor core fixedly connected to the axle and a plurality of coils fixedly connected to the motor core. All the coils are circularly arrayed on the motor core with an axis of the axle as a center, and each coil is arranged away from the axle. The rotor includes a plurality of magnetic steels fixedly connected within the hub. Two poles of each magnetic steel are respectively located at two ends of the magnetic steel in an axial direction of the axle, and adjacent magnetic steels have opposite polarities. A magnetic field is distributed in the axial direction of the axle, and an air gap is formed between the magnetic steels and the coils.

By adopting the above-mentioned solution, the stator and the rotor located on the outer side of the axle form an axial motor structure, which has a short magnetic flux path, a high power density, and a high energy utilization rate, and can output a greater torque. Moreover, the axial motor has a smaller size and can more easily adapt to a small hub, occupying less space within the hub.

Preferably, the motor core includes a core body fixedly connected to the axle and a plurality of protrusions fixedly connected to an outer side of the core body. The protrusions extend out from two sides of the core body, and each coil surrounds one protrusion. The magnetic steels are arranged on two sides of the protrusions.

By adopting the above-mentioned solution, a structure with a single stator and dual rotors is formed, which can further improve the power density.

Preferably, circuit boards are fixedly connected to the motor core. The circuit boards are provided with a motor control system, and the motor control system receives external control signals and controls whether the stator is energized and the magnitude of energizing power according to the control signals.

By adopting the above-mentioned solution, an electric vehicle can control the startup and power of the motor through the motor control system, primarily for adjusting a speed of the electric vehicle. Due to less space occupation, the axial motor provides sufficient space for the circuit boards to be directly installed inside the hub.

Preferably, the number of the circuit boards is two, and the two circuit boards are arranged on two sides of the motor core respectively. A position of the motor core close to the circuit boards is provided with a plurality of process holes, and the process holes are all located between the two circuit boards.

By adopting the above-mentioned solution, since the axial motor is prone to generating a large amount of heat, an ambient temperature inside the hub can easily rise significantly. In addition to increasing a layout space for a circuit, the two circuit boards can also expand a heat dissipation area. The process holes not only reduce a weight of the motor core but also decrease a contact area between the circuit boards and the motor core, reducing the heat directly transferred to the circuit boards.

Preferably, positions of the hub corresponding to the magnetic steels are fixedly connected to a gasket, all the magnetic steels are fixedly connected to the gasket, and the gasket annularly surrounds the axle.

By adopting the above-mentioned solution, the gasket serves to isolate the magnetic steels from the hub, reducing external interference to the magnetic steels, and meanwhile the gasket can also provide positioning for the magnetic steels during installation.

Preferably, the motor control system includes an on-off module, a power adjustment module, a temperature monitoring module, and a heat dissipation control module.

The on-off module receives the external control signals, controls the stator to be powered according to the received signals, and sends the control signals to the power adjustment module.

The power adjustment module controls the power of the stator according to the control signals.

The temperature monitoring module detects a temperature value of the circuit boards in real time and transmits the temperature value to the heat dissipation control module.

The heat dissipation control module has a preset maximum temperature limit. When the received temperature value exceeds the maximum temperature limit, the power of the stator is controlled to decrease.

By adopting the above-mentioned solution, to prevent an internal temperature of the hub from becoming too high due to continuous high-power operation of the motor, the motor control system can intelligently control the motor power. When the internal temperature of the hub is too high, the motor power is reduced to avoid further rapid temperature rise.

Preferably, a position of the hub close to the axle is provided with a plurality of inner heat dissipation holes, and an outer circle of the hub is provided with a plurality of outer heat dissipation holes. The inner heat dissipation holes and the outer heat dissipation holes all pass through the hub. A position of the hub close to an outer circle of the motor core is fixedly connected to a heat dissipation ring, and the outer circle of the motor core abuts against the heat dissipation ring.

By adopting the above-mentioned solution, when the wheel rotates rapidly, centrifugal force is generated. The inner heat dissipation holes and the outer heat dissipation holes cooperate to allow air to flow through an interior of the hub when the electric vehicle is running, enhancing a heat dissipation capability of the motor, and also facilitate a user in adding maintenance fluids such as lubricating oil into the hub. Since a position with the highest temperature on the motor core is a position close to the coils, and the coils in the present disclosure are located on an outer side of the motor core, the direct abutment of the outer circle of the motor core against the heat dissipation ring can effectively accelerate heat dissipation.

Preferably, the motor core includes a core body fixedly connected to the axle. A position of the core body corresponding to each coil is provided with an empty slot. An interior of each empty slot is slidably connected to two lugs, where the two lugs slide in an axis direction of the axle within the empty slot. The coils sleeve the lugs. An airbag is arranged at a position of each empty slot corresponding to a position between the two lugs. All the airbags are jointly connected to a gas pipeline, and the gas pipeline is in communication with interiors of the airbags. The gas pipeline is fixedly connected to a micro air pump, and the micro air pump is fixedly connected to the core body.

The motor control system receives an adjustment instruction and controls the micro air pump to either inhale or exhale air according to the adjustment instruction.

By adopting the above-mentioned solution, a height of the air gap between the coils and the magnetic steels directly affects magnetic reluctance of the motor, thereby influencing motor efficiency. A decrease or increase in the height of the single air gap can also impact the heat dissipation capability and reliability of the motor. The user may control the micro air pump to inhale or exhale air through the motor control system, thereby controlling a size of the airbags. Since the airbags affect a height of the lugs, the height of the air gap between the coils and the magnetic steels can be changed, such that a control method is simple and suitable for the user to make professional adjustments to the electric vehicle.

By adopting the above-mentioned solution, an air gap monitoring module can, on one hand, provide a real-time motor power factor, and on the other hand, give an alarm when an air gap height value inside the hub varies, preventing failures during motor startup.

In a second aspect, an embodiment further provides an electric wheel. The electric wheel includes spokes, a rim, and a tire, and also includes the above-mentioned electric hub structure based on the axial motor.

The spokes are fixedly connected to the hub, the rim is fixedly connected to exteriors of the spokes, and the tire is fixedly connected to an exterior of the rim.

The present disclosure has following beneficial effects:
1. The stator and the rotor located on the outer side of the axle form an axial motor structure, which has a short magnetic flux path, a high power density, and a high energy utilization rate, and can output a greater torque.
2. The axial motor has a smaller size and can more easily adapt to a small hub, occupying less space within the hub.

### BRIEF DESCRIPTION OF THE DRAWINGS

To describe technical solutions in embodiments of the present disclosure more clearly, the following briefly describes accompanying drawings required for describing the embodiments. Apparently, the accompanying drawings in the following description show merely some embodiments of the present disclosure, and a person of ordinary skill in the art may still derive other accompanying drawings from these accompanying drawings without creative efforts.
Fig. 1 is a schematic diagram of an overall structure according to Embodiment 1 of this application.
Fig. 2 is a cross-sectional view of an interior of a hub according to Embodiment 1 of this application.
Fig. 3 is an enlarged view of an area A in Fig. 2.
Fig. 4 is a cross-sectional view of parts including magnetic steels and circuit boards according to Embodiment 1 of this application.
Fig. 5 is a schematic structural diagram of a hub and an axle according to Embodiment 2 of this application.
Fig. 6 is a cross-sectional view of an internal structure of the hub according to Embodiment 2 of this application.
Fig. 7 is an enlarged view of an area B in Fig. 6.

Description of Reference Numerals:
1-hub; 11-axle; 12-inner heat dissipation hole; 13-outer heat dissipation hole; 14-heat dissipation ring; 2-spoke; 3-rim; 4-tire; 5-stator; 51-motor core; 511-core body; 512-protrusion; 513-process hole; 514-empty slot; 515-airbag; 516-gas pipeline; 517-micro air pump; 518-lug; 52-coil; 6-rotor; 61-magnetic steel; 62-gasket; 7-circuit board; 8-motor control system; 81-on-off module; 82-power adjustment module; 83-temperature monitoring module; and 84-heat dissipation control module.

### DETAILED DESCRIPTION OF THE EMBODIMENTS

Technical solutions in embodiments are clearly and completely described below in combination with accompanying drawings in the embodiments, and it is apparent that the described embodiments are merely a part rather all of the embodiments.

### Embodiment 1

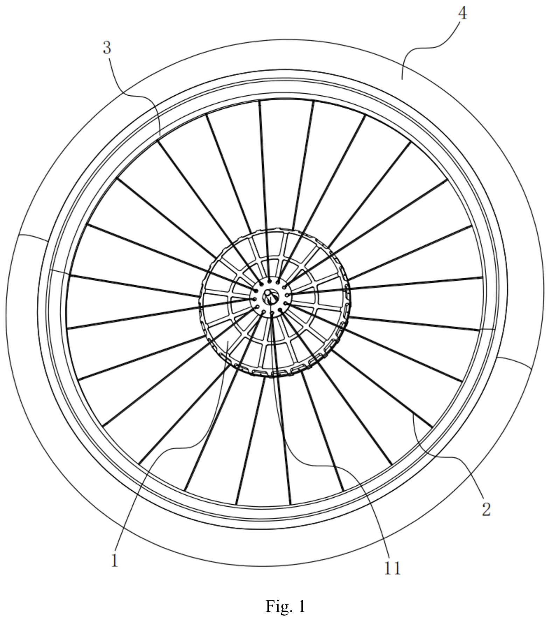

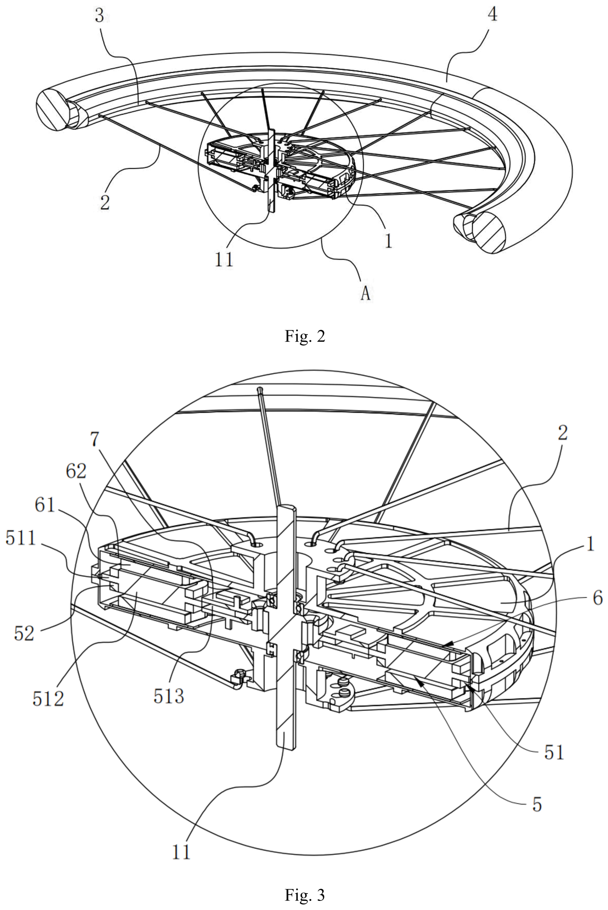

As shown in Fig. 1 and Fig. 2, this embodiment discloses an electric wheel based on an axial motor, including a hub 1, spokes 2 fixedly connected to the hub 1, a rim 3 fixedly connected to exteriors of the spokes 2, and a tire 4 fixedly connected to an exterior of the rim 3.

A center of the hub 1 is rotationally connected to an axle 11 through a bearing. The hub 1 is fixedly connected to a flange ring, and the spokes 2 are fixedly connected to the flange ring.

As shown in Fig. 2 and Fig. 3, a stator 5 is fixedly connected to an outer side of the axle 11, and the stator 5 is located within the hub 1. A rotor 6 is fixedly connected to a position of an inner side of the hub 1 close to the stator 5. The stator 5 includes a motor core 51 fixedly connected to the axle 11 and a plurality of coils 52 fixedly connected to the motor core 51. All the coils 52 are circularly arrayed on the motor core 51 with an axis of the axle 11 as a center, and each coil 52 is arranged away from the axle 11. The rotor 6 includes a plurality of magnetic steels 61 fixedly connected within the hub 1. Positions of the hub 1 corresponding to the magnetic steels 61 are fixedly connected to a gasket 62, and the magnetic steels 61 are all fixedly connected to the gasket 62. The gasket 62 annularly surrounds the axle 11. The motor core 51 includes a core body 511 fixedly connected to the axle 11 and a plurality of protrusions 512 fixedly connected to an outer side of the core body 511. The protrusions 512 extend out from two sides of the core body 511, and each coil 52 surrounds one protrusion 512. The magnetic steels 61 are arranged on two sides of the protrusions 512. The coils 52 and the magnetic steels 61 cooperate to form a structure with a single stator 5 and dual rotors 6, which can further improve a power density. The magnetic steels 61 are arranged in a Halbach array on the gasket 62, which can effectively enhance a magnetic field, further improve the power density, and reduce electromagnetic interference.

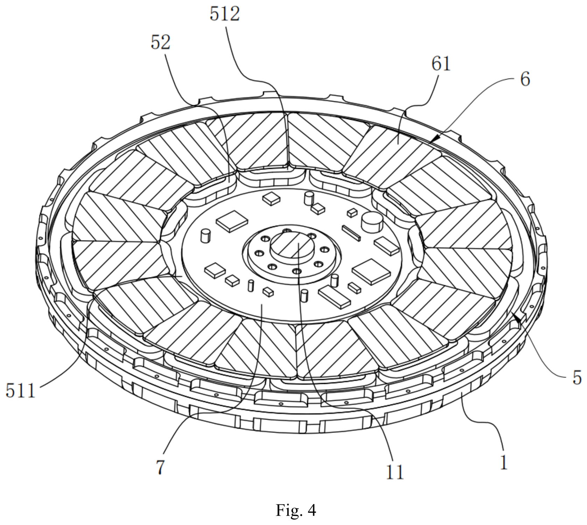

As shown in Fig. 3 and Fig. 4, two circuit boards 7 are fixedly connected to the motor core 51, and the two circuit boards 7 are arranged on two sides of the motor core 51 respectively. A position of the motor core 51 close to the circuit boards 7 is provided with a plurality of process holes 513, and the process holes 513 are all located between the two circuit boards 7. Since the axial motor is prone to generating a large amount of heat, an ambient temperature inside the hub 1 can easily rise significantly. In addition to increasing a layout space for a circuit, the two circuit boards 7 can also expand a heat dissipation area. The process holes 513 not only reduce a weight of the motor core 51 but also decrease a contact area between the circuit boards 7 and the motor core 51, reducing the heat directly transferred to the circuit boards 7. The circuit boards 7 are provided with a motor control system 8, and the motor control system 8 receives external control signals and controls whether the stator 5 is energized and the magnitude of energizing power according to the control signals.

An implementation principle of an electric hub structure based on the axial motor in this embodiment is as follows: the stator 5 and the rotor 6 located on the outer side of the axle 11 form an axial motor structure, which has a short magnetic flux path, a high power density, and a high energy utilization rate, and can output a greater torque. Moreover, the axial motor has a smaller size and can more easily adapt to a small hub 1, occupying less space within the hub 1.

### Embodiment 2

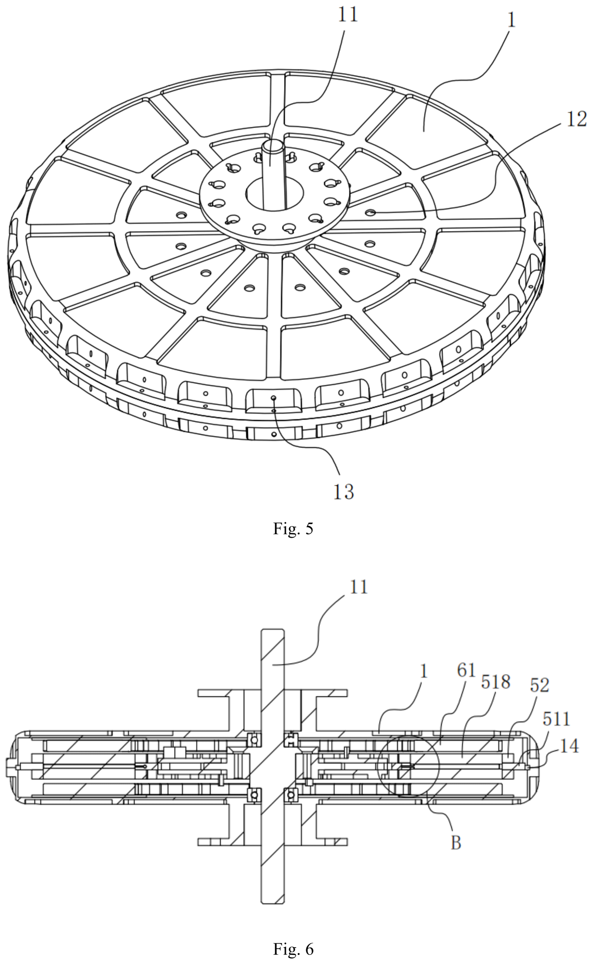

As shown in Fig. 5 and Fig. 6, this embodiment discloses an electric hub structure based on an axial motor. The electric hub structure differs from Embodiment 1 in that a position of the hub 1 close to the axle is provided with a plurality of inner heat dissipation holes 12, and an outer circle of the hub 1 is provided with a plurality of outer heat dissipation holes 13. The inner heat dissipation holes 12 and the outer heat dissipation holes 13 all pass through the hub 1. A position of the hub 1 close to an outer circle of the motor core 51 is fixedly connected to a heat dissipation ring 14, and the outer circle of the motor core 51 abuts against the heat dissipation ring 14. When a wheel rotates rapidly, centrifugal force is generated. The inner heat dissipation holes 12 and the outer heat dissipation holes 13 cooperate to allow air to flow through an interior of the hub 1 when an electric vehicle is running, enhancing a heat dissipation capability of the motor, and also facilitate the user in adding maintenance fluids such as lubricating oil into the hub 1.Since a position with the highest temperature on the motor core 51 is a position close to the coils 52, and the coils 52 in the present disclosure are located on an outer side of the motor core 51, the direct abutment of the outer circle of the motor core 51 against the heat dissipation ring 14 can effectively accelerate heat dissipation.

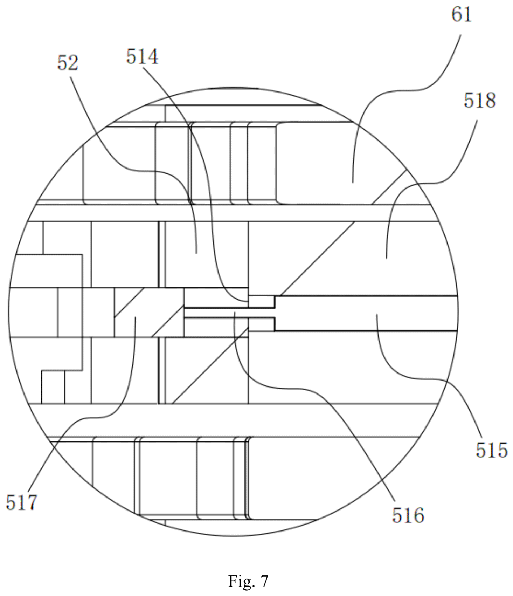

As shown in Fig. 6 and Fig. 7, the motor core 51 includes a core body 511 fixedly connected to the axle 11. A position of the core body 511 corresponding to each coil 52 is provided with an empty slot 514. An interior of each empty slot 514 is slidably connected to two lugs 518, where the two lugs 518 slide in an axis direction of the axle 11 within the empty slot 514. The coils 52 sleeve the lugs 518.An airbag 515 is arranged at a position of each empty slot 514 corresponding to a position between the two lugs 518. All the airbags 515 are jointly connected to a gas pipeline 516, and the gas pipeline 516 is in communication with interiors of the airbags 515. The gas pipeline 516 is fixedly connected to a micro air pump 517, and the micro air pump 517 is fixedly connected to the core body 511.

Although the embodiments of this application have been shown and described above, the protection scope of the present disclosure is not limited thereto. Any changes or substitutions conceived without creative effort should be covered within the protection scope of the present disclosure. Unless explicitly stated otherwise, any element, action, or instruction used herein should not be interpreted as critical or necessary.

## Claims

1. An electric hub structure based on an axial motor, comprising a hub (1), **characterized in that**:
a center of the hub (1) is rotationally connected to an axle (11), an outer side of the axle (11) is fixedly connected to a stator (5), and the stator (5) is located within the hub (1);
a position of an inner side of the hub (1) close to the stator (5) is fixedly connected to a rotor (6), and the stator (5) comprises a motor core (51) fixedly connected to the axle (11) and a plurality of coils (52) fixedly connected to the motor core (51);
the coils (52) are circularly arrayed on the motor core (51) with an axis of the axle (11) as a center, and each coil (52) is arranged away from the axle (11); and
the rotor (6) comprises a plurality of magnetic steels (61) fixedly connected within the hub (1), adjacent magnetic steels (61) have opposite polarities, a magnetic field is distributed in an axial direction of the axle (11), and an air gap is formed between the magnetic steels (61) and the coils (52).

2. The electric hub structure based on the axial motor according to claim 1, wherein the motor core (51) comprises a core body (511) fixedly connected to the axle (11) and a plurality of protrusions (512) fixedly connected to an outer side of the core body (511), the protrusions (512) extend out from two sides of the core body (511), each coil (52) surrounds one protrusion (512), and the magnetic steels (61) are arranged on two sides of the protrusions (512).

3. The electric hub structure based on the axial motor according to claim 1, wherein the motor core (51) is fixedly connected to circuit boards (7), the circuit boards (7) are provided with a motor control system (8), and the motor control system (8) receives external control signals and controls whether the stator (5) is energized and the magnitude of energizing power according to the control signals.

4. The electric hub structure based on the axial motor according to claim 3, wherein the number of the circuit boards (7) is two, the two circuit boards (7) are arranged on two sides of the motor core (51) respectively, a position of the motor core (51) close to the circuit boards (7) is provided with a plurality of process holes (513), and the plurality of process holes (513) are all located between the two circuit boards (7).

5. The electric hub structure based on the axial motor according to claim 1, wherein positions of the hub (1) corresponding to the magnetic steels (61) are fixedly connected to a gasket (62), all the magnetic steels (61) are fixedly connected to the gasket (62), and the gasket (62) annularly surrounds the axle (11).

6. The electric hub structure based on the axial motor according to claim 1, wherein the motor control system (8) comprises an on-off module (81), a power adjustment module (82), a temperature monitoring module (83), and a heat dissipation control module (84);
the on-off module (81) receives external control signals, controls the stator (5) to be powered according to the received signals, and sends the control signals to the power adjustment module (82);
the power adjustment module (82) controls the power of the stator (5) according to the control signals;
the temperature monitoring module (83) detects a temperature value of the circuit boards (7) in real time and transmits the temperature value to the heat dissipation control module (84); and
when the temperature value received by the heat dissipation control module (84) exceeds a maximum temperature limit, the power of the stator (5) is controlled to decrease.

7. The electric hub structure based on the axial motor according to claim 1, wherein a position of the hub (1) close to the axle is provided with a plurality of inner heat dissipation holes (12), and an outer circle of the hub (1) is provided with a plurality of outer heat dissipation holes (13); and
the inner heat dissipation holes (12) and the outer heat dissipation holes (13) all pass through the hub (1), a position of the hub (1) close to an outer circle of the motor core (51) is fixedly connected to a heat dissipation ring (14), and the outer circle of the motor core (51) abuts against the heat dissipation ring (14).

8. The electric hub structure based on the axial motor according to claim 3, wherein the motor core (51) comprises a core body (511) fixedly connected to the axle (11), and a position of the core body (511) corresponding to each coil (52) is provided with an empty slot (514);
an interior of each empty slot (514) is slidably connected to two lugs (518), the two lugs (518) slide in an axis direction of the axle (11) within the empty slot (514), and the coils (52) sleeve the lugs (518);
an airbag (515) is arranged at a position of each empty slot (514) corresponding to a position between the two lugs (518), all the airbags (515) are connected to a gas pipeline (516), the gas pipeline (516) is in communication with interiors of the airbags (515), the gas pipeline (516) is fixedly connected to a micro air pump (517), and the micro air pump (517) is fixedly connected to the core body (511); and
the motor control system (8) receives an adjustment instruction and controls the micro air pump (517) to either inhale or exhale air according to the adjustment instruction.

9. An electric wheel, comprising spokes (2), a rim (3), and a tire (4), further comprising the electric hub structure based on the axial motor according to any one of claims 1 to 8, wherein the spokes (2) are fixedly connected to a hub (1), the rim (3) is fixedly connected to exteriors of the spokes (2), and the tire (4) is fixedly connected to an exterior of the rim.
